Europäisches Patentamt

European Patent Office

Office européen des brevets

(11) Veröffentlichungsnummer: **0 237 703 B1**

# EUROPÄISCHE PATENTSCHRIFT

(45) Veröffentlichungstag der Patentschrift: **24.04.91**

(51) Int. Cl.$^5$: **B27K 5/00**, B27K 3/50

(21) Anmeldenummer: **87100272.1**

(22) Anmeldetag: **12.01.87**

(54) **Mittel und Verfahren zur Dimensionsstabilisierung von Holz oder Holzwerkstoffen.**

(30) Priorität: **21.03.86 DE 3609589**

(43) Veröffentlichungstag der Anmeldung:
**23.09.87 Patentblatt 87/39**

(45) Bekanntmachung des Hinweises auf die
Patenterteilung:
**24.04.91 Patentblatt 91/17**

(84) Benannte Vertragsstaaten:
**AT CH DE FR IT LI SE**

(56) Entgegenhaltungen:
**EP-A- 0 022 900**
**EP-A- 0 152 369**
**US-A- 4 276 329**
**US-A- 4 404 239**

**CHEMICAL ABSTRACTS, Band 77, Nr. 26, 25.**
**Dezember 1972, Seite 102, Zusammenfas-**
**sung Nr. 166445p, Columbus, Ohio, US; &**
**CS-A-144 038 (M. LEDVINA et al.) 15-12-1971**

**CHEMICAL ABSTRACTS, Band 71, Nr. 10, 8.**
**September 1969, Seite 90, Zusammenfas-**
**sung Nr. 40282r, Columbus, Ohio, US; K.I.**
**RATNIKOVA et al.: "Modification of alkyds**
**with hydrocarbon-formaldehyde resins", &**
**VESTN. KHAR'KOV. POLITEKH. INST. 1967,**

Nr. 23, 95-9

(73) Patentinhaber: **RÜTGERSWERKE AKTIENGE-**
**SELLSCHAFT**
**Mainzer Landstrasse 217**
**W-6000 Frankfurt am Main 1(DE)**

(72) Erfinder: **Böttcher, Peter, Dr.**
**Lilienweg 19**
**W-3300 Braunschweig(DE)**
Erfinder: **Zander, Maximilian, Prof. Dr.**
**Friedenstrasse 9**
**W-4620 Castrop-Rauxel(DE)**

**Beschreibung**

Die Erfindung betrifft ein neues Mittel und ein Verfahren zur Dimensionsstabilisierung von Holz oder Holzwerkstoffen.

Die hauptsächlichen Bewegungen und Formänderungen des hygroskopischen Werkstoffes Holz werden durch Feuchteänderungen verursacht. Sie sind in den verschiedenen anatomischen Richtungen des Holzes unterschiedlich groß.

Diese Bewegungen des Holzes durch Quellen bzw. Schwinden sind unter anderem die Ursache für das Reißen des Holzes und das Aufgehen von Konstruktionsfugen, besonders dort wo Holzteile unterschiedlicher anatomischer Richtung aneinandergrenzen. Auch die Rißbildung in Lackbeschichtungen ist häufig auf eine quellungs-bzw. schwindungsbedingte Bewegung, d. h. auf eine mangelnde Dimensionsstabilität des Holzes zurückzuführen.

Zur Behebung dieses Nachteils sind bislang zwei verschiedene Wege beschritten worden:

a. die Behinderung der Feuchteaufnahme des Holzes,

b. die Quellungsvergütung.

Die Behinderung der Feuchteaufnahme kann durch Beschichten der Mantelflächen der Holzteile mit Lacken oder durch Imprägnieren des Holzes mit aushärtenden Harzlösungen erfolgen. Abgesehen von dem für viele Anwendungszwecke unwirtschaftlichen Polymerholz, bei dem das Harz einen so hohen Kunststoffanteil hat, daß der Kunststoff die tragende Funktion übernimmt und das Holz lediglich als verstärkender Füllstoff vorhanden ist, führen Beschichtungen oder Imprägnierungen mit bisher bekannten Harzen oder Harzlösungen nicht zu einer Dimensionsstabilität, sondern nur zu einer Diffusionsverzögerung. Bei hinreichend langer Feuchteeinwirkung wird auch hier die dem umgebenden Klima entsprechende Ausgleichsfeuchte im Holz und damit ein Quellungszustand erreicht, der dem von unbehandeltem Holz gleicher Feuchtigkeit gleich ist. Die Quellung wird also nur verzögert, nicht aber verhindert. Gleiches gilt für den umgekehrten Vorgang, die Schwindung.

Durch Quellungsvergütung hingegen wird erreicht, daß trotz des Eindringens von Feuchtigkeit in den Holzkörper keine oder nur eine geringe Quellung auftritt.

Als quellungsvergütende Maßnahmen sind folgende Verfahren bekannt:

Imprägnierung mit Polyethylenglykol:

Bei der Restaurierung von lange unter Wasser gelagerten, historischen Holzteilen wird zur Dimensionsstabilisierung Polyethylenglykol eingesetzt. Nachteilig an dieser Methode ist, daß das Polyethylenglykol wasserlöslich bleibt, also wieder ausgewaschen werden kann, und bei manchen Lacksystemen trocknungsinhibierend wirkt.

FWD-Verfahren gemäß DE-A-22 63 758 oder EP-B-00 18 446:

Hierbei wird durch Einwirken von Wärme, Druck und Wasserdampf die Quellfähigkeit des Holzes deutlich vermindert. Nachteilig ist der damit verbundene Holzsubstanzverlust und die daraus resultierende Festigkeitsminderung. Auch verfärbt sich das Holz bei dieser Behandlung, was nicht immer erwünscht ist.

Begasung:

Eine Begasung mit Formaldehyd kann zu einer Dimensionsstabilisierung führen. Die Wirkung basiert wahrscheinlich auf der Reaktion von im Holz vorhandenen Polyphenolen, wozu ebenfalls Feuchtigkeit und Wärme erforderlich sind. Wegen der noch lange nach der Behandlung anhaltenden Abgabe von Formaldehyd an die Luft und den damit verbundenen Belästigungen und gesundheitlichen Risiken ist das Verfahren kaum großtechnisch einzusetzen.

Einlagerung von Gerbstoffen:

In DE-A-34 05 373 ist ein Verfahren beschrieben, bei dem durch Einlagerung von Gerbstoffen in die Zellwände eine Dimensionsstabilisierung bewirkt wird. Auch hier ist eine Wärmeeinwirkung erforderlich. Zudem ist das Verfahren, bedingt durch die relativ großen notwendigen Mengen an Gerbstoffen und deren Preisniveau, wenig wirtschaftlich.

Es ist daher die Aufgabe der vorliegenden Erfindung, eine einfache, wirtschaftliche Methode zur dauerhaften und witterungsbeständigen Dimensionsstabilisierung von Holz oder Holzwerkstoffen zu liefern, bei der die Eigenschaften des Holzes nicht verschlechtert werden.

Die Lösung der Aufgabe erfolgt durch Bereitstellung eines Mittels zur Dimensionsstabilisierung von Holz oder Holzwerkstoffen gemäß der Ansprüche 1 bis 7 und durch ein dazugehöriges Verfahren gemäß der Ansprüche 8 bis 11.

Es wurde gefunden, daß Lösungen, Emulsionen oder Suspensionen, die 0,01-2 Gew.-% eines kondensierten, mehrkernigen Aromaten aus der Gruppe der Alkylnaphthaline, Anthracen, Phenanthren, Pyren und der jeweiligen Homologen, Fluoren , Alkyl- und Benzofluorene, Alkyl- und Benzofluoranthene, Acenaphthylen, Fluorenol, Indenopyren, Azulene, Decacyclen oder Fluoranthen, und 5-20 Gew.-%, bezogen auf das

EP 0 237 703 B1

gebrauchsfähige Mittel, eines Alkydharzes enthalten, eine sehr gute quellungsvergütende Wirkung besitzen und somit eine ausgezeichnete Dimensionsstabilisierung von Holz und Holzwerkstoffen ermöglichen. So konnte z. B. die Volumenquellung von Buchenholz von 18 bis 25 Volumen-% auf 6 bis 10 Volumen-% reduziert werden. Dieses Ergebnis ist vor allem deshalb überraschend, weil die entsprechenden aromatischen Verbindungen und die Alkydharze, jeweils alleine verwendet, keine dimensionsstabilisierende Wirkung zeigen. Als Alkydharze eignen sich die für Lacke üblichen Alkydharz-Bindemittel, und zwar sowohl die kurz-, mittel- und langöligen Alkydharze als auch die mit Metallalkoholaten, Isocyanaten oder Epoxiden modifizierten Alkydharze.

Diese Harze sind als Lösungen in organischen Lösemitteln oder Wasser oder als Emulsionen oder Suspensionen in Wasser erhältlich. Alle diese Handelsformen sind einsetzbar. Bevorzugt sind wasserverdünnbare Alkydharz-Emulsionen oder -Suspensionen.

Die aromatischen Kohlenwasserstoffe können entweder in einem organischen Lösemittel gelöst und so mit einer Lösung eines Alkydharzes in einem organischen Lösemittel oder mit einer Lösung oder Emulsion oder Suspension eines Alkydharzes in Wasser vermischt werden, wobei sich gegebenenfalls neue Suspensionen oder Emulsionen ausbilden, oder sie können als fein verteilte Pulver oder geschmolzen direkt in eine Lösung eines Alkydharzes in einem organischen Lösemittel oder in eine Lösung oder Emulsion oder Suspension eines Alkydharzes in Wasser gegeben und unter Einwirkung von Scherkräften darin feinst verteilt werden.

Beispiele für geeignete organische Lösemittel sind Kohlenwasserstoffe, wie Testbenzin, Terpenkohlenwasserstoffe, aromatenfreie Petroleumfraktionen oder Isoparaffine, Glykolether, Ketone, Glykoletheracetate und Glykolsäureester sowie Alkohole und Mischungen dieser Lösemittel

Zusätzlich kann das erfindungsgemäße Mittel gegebenenfalls übliche Lackadditive enthalten, z. B. Sikkative, Antihautmittel, Fungizide, Insektizide, Bakterizide, Emulgatoren, Antischaummittel, UV-Absorber, Verlaufmittel, Netzmittel, Verdickungsmittel, Füllstoffe, Färbemittel, wie Farbstoffe oder Pigmente, und Feuerschutzmittel.

Gewöhnlich enthält das erfindungsgemäße Mittel 5 bis 20, vorzugsweise 7,5 bis 15 Gewichtsprozent Alkydharz und 0,01 bis 1 Gewichtsprozent, bevorzugt 0,1 bis 0,5 Gewichtsprozent einer oder mehrerer aromatischer Kohlenwasserstoffe mit mehr als 10 C-Atomen im Molekül.

Die gegebenenfalls verwendeten Additive werden in üblichen Konzentrationen angewandt.

In einer bevorzugten Ausführungsform enthält das erfindungsgemäße Mittel ein wasserverdünnbares Alkydharz und einen aromatischen Kohlenwasserstoff mit mehr als 10 C-Atomen, in einem wäßrig-organischen Lösemittelsystem aus maximal 15 Gewichtsprozent organischem Lösemittel, z. B. Testbenzin, Wasser und einem handelsüblichen Emulgator.

Die erfindungsgemäßen Mittel eignen sich zur Dimensionsstabilisierung von Hölzern, z. B. Buchenholz, und Holzwerkstoffen, z. B. Preßspanplatten. Die Behandlung des Holzes oder Holzwerkstoffes mit dem erfindungsgemäßen Mittel kann auf beliebige Weise erfolgen, z. B. durch Auftragen, Aufstreichen, Aufsprühen oder Tränken unter Anwendung von Ober- und/oder Unterdruck (Kessel -Vakuum-und/oder Kessel-Druck-Verfahren) oder ohne Anwendung von Ober- oder Unterdruck.

Das zu behandelnde Holz soll einen Feuchtigkeitsgehalt von 5 bis 25 Gewichtsprozent, vorzugsweise von 10 bis 15 Gewichtsprozent, haben.

Durch die erfindungsgemäße Behandlung werden dem Holz oder Holzwerkstoff die gewünschte Dimensionsstabilität und bei gleichzeitiger Anwendung geeigneter Additive (z. B. Fungizide) weitere vorteilhafte Eigenschaften (z. B. Pilzresistenz) verliehen.

Beispiele

Lufttrockene Buchenholzklötze der Abmessungen 30 (in Faserrichtung) x ˙5 x 5 cm² werden mit verschiedenen Lösungen oder Emulsionen durch 5minütiges Eintauchen bei einem Druck von $7,5 \times 10^3$ Pa behandelt.

Um den Einfluß der Hirnenden auszuschalten, werden die Holzklötze danach in der Mitte durchgeschnitten, so daß Holzkörper der Abmessungen 15 x 5 x 5 cm² entstehen. Von diesen werden, von der neuen Schnittstelle her, jeweils 5 cm abgeschnitten. Die so erhaltenen 5 x 5 x 5 cm² großen Probeklötzchen werden bei 40 °C auf eine Holzfeuchte von 12 % getrocknet und danach 1 d bei Normklima (20/65) klimatisiert.

Die so präparierten Klötzchen werden 5 d lang bei Raumtemperatur in feuchter Luft (> 95 % relative Feuchte) gelagert. Vor und nach dieser Feuchtelagerung werden die Proben untersucht und folgende Werte bestimmt:

- Feuchtedifferenz = Differenz der Holzfeuchte der Probekörper vor und nach der Feuchtelagerung;
- Volumenquellmaß = Veränderung des Volumens des Holzkörpers bei Erhöhung der Holzfeuchte, bezogen auf das Ausgangsvolumen (%);
- Differentielles Quellmaß = Volumenquellmaß, bezogen auf Feuchtedifferenz (%/%).

## Probenvorbehandlung:

| Versuch | Imprägniermittel |
|---|---|
| 1 (Rohproben) | ohne |
| 2 | Alkydharzemulsion aus<br>7,5 Gew.-% mittelöliges Alkydharz<br>9 Gew.-% Testbenzin<br>0,1 Gew.-% Dispergiermittel<br>(Disperbyk[R] )<br>Rest Wasser |
| 3 | Lösung von 0,1 Gew.-% Fluoranthen in Testbenzin |
| 4 | Alkydharzemulsion gemäß Versuch 2 und 0,1 Gew.-% Fluoranthen |

## Ergebnisse nach der Feuchtelagerung:

| Versuch | Feuchte-differenz (%) | Volumen-quellmaß (%) | Differentielles Quellmaß (%/%) |
|---|---|---|---|
| 1 | 6,6 | 3,9 | 0,59 |
| 2 | 4,3 | 2,4 | 0,57 |
| 3 | 6,5 | 3,8 | 0,58 |
| 4 | 4,5 | 1,4 | 0,31 |

Die Ergebnisse zeigen, daß die Imprägnierung mit Fluoranthenlösung weder eine Veränderung der Feuchteaufnahme, noch des Volumenquellmaßes bewirkt. Die Alkydharzlösung ermöglicht zwar eine Verringerung der Feuchteaufnahme und, absolut gesehen, eine entsprechende Verringerung der Volumenquellung. Es findet jedoch keine Quellungsvergütung statt, da das differentielle Quellmaß nicht verändert wird.

Durch die Imprägnierung oder Beschichtung mit der trocknenden und aushärtenden Alkydharzlösung wird lediglich die Aufnahme von Wasser durch die Cellulosefibrillen des Holzes verzögert, nicht aber verhindert. Bei genügend langer Einwirkdauer der Feuchtigkeit nimmt das Holz Wasser bis zur maximalen Sättigung auf und quillt dabei in gleichem Maße wie unbehandeltes Holz. Dagegen ist bei der erfindungsgemäßen Kombination aus Alkydharzlösung/Fluoranthen sowohl die durch das Alkydharz verursachte geringere Wasseraufnahme festzustellen, außerdem aber noch eine überproportionale Verringerung der Volumenquellung und damit ein deutlich geringeres differentielles Quellmaß.

## Ansprüche

1.  Mittel zur Dimensionsstabilisierung von Holz oder Holzwerkstoffen, **dadurch gekennzeichnet,** daß es 0,01-2 Gew.-% eines kondensierten, mehrkernigen Aromaten aus der Gruppe der Alkylnaphthaline, Anthracen, Phenanthren, Pyren und der jeweiligen Homologen, Fluoren, Alkyl- und Benzofluorene, Alkyl- und Benzofluoranthene, Acenaphthylen, Fluorenol, Indenopyren, Azulene, Dekacyclen oder Fluoranthen, und 5-20 Gew.-%, bezogen auf das gebrauchsfähige Mittel, eines Alkydharzes enthält.

2.  Mittel nach Anspruch 1, **dadurch gekennzeichnet,** daß die aromatische Verbindung und das Alkydharz in einem organischen Lösemittel gelöst sind.

3.  Mittel nach den Ansprüchen 1 und 2, **dadurch gekennzeichnet,** daß eine Lösung gemäß Anspruch 2 mit Wasser emulgiert ist.

4.  Mittel nach Anspruch 1, **dadurch gekennzeichnet,** daß die aromatische Verbindung und das Alkydharz in Wasser suspendiert sind.

5.  Mittel nach Anspruch 1, **dadurch gekennzeichnet,** daß eine Lösung einer aromatischen Verbindung in einem mit Wasser nicht mischbaren organischen Lösemittel mit einer wäßrigen Lösung eines wasserlöslichen Alkydharzes emulgiert ist.

6.  Mittel nach Anspruch 1, **dadurch gekennzeichnet,** daß es als aromatische Verbindung Fluoranthen enthält.

7.  Mittel nach einem der Ansprüche 1 bis 6, **dadurch gekennzeichnet,** daß es außerdem übliche Lackadditive, z. B. Sikkative, Fungizide, Insektizide, Bakterizide, Emulgatoren, Antischaummittel, UV-Absorber, Verlaufmittel, Netzmittel , Verdickungsmittel, Färbemittel oder Feuerschutzmittel, in üblichen Konzentrationen enthält.

8.  Verfahren zur Dimensionsstabilisierung von Holz oder Holzwerkstoffen, **dadurch gekennzeichnet,** daß man ein Mittel nach einem der Ansprüche 1 bis 7 verwendet.

9.  Verfahren nach Anspruch 8, **dadurch gekennzeichnet,** daß man die Behandlung des Holzes oder Holzwerkstoffes mit dem Mittel unter Anwendung von Über- und/oder Unterdruck durchführt.

10. Verfahren nach Anspruch 8, **dadurch gekennzeichnet,** daß man die Behandlung des Holzes oder Holzwerkstoffes mit dem Mittel ohne Anwendung von Über- oder Unterdruck durchführt.

11. Verfahren nach einem der Ansprüche 8 bis 10, **dadurch gekennzeichnet,** daß man Buchenholz behandelt.

## Claims

1.  Agent to increase the dimension stability of wood or particle boards, characterized in that it contains 0,01 - 2 percent by weight of a condensed polynuclear aromatic compound of the group of the alkylnaphthalenes, anthracene, phenanthrene, pyrene and their respective homologues, fluorene, alkyl - and benzofluorenes, alkyl- and benzofluoranthenes, acenaphthylene, fluorenol, indenopyrene, azulenes,

5

decacyclene or fluoranthen and 5 - 20 percent by weight, referred to the ready to use agent, of an alkyd resin.

2. Agent of claim 1, wherein the aromatic compounds and the alkyd resin are solved in an organic solvent.

3. Agent of the claims 1 and 2, wherein the solution of claim 2 is emulgated with water.

4. Agent of claim 1, wherein the aromatic compound and the alkyd resin are suspended in water.

5. Agent of claim 1, wherein a solution of an aromatic compound in an organic solvent, which is not miscible with water, is emulgated with an aqueous solution of an alkyd resin which is soluble in water.

6. Agent of claim, wherein the aromatic compound is fluoranthene.

7. Agent of one of the claims 1 to 6, characterized in that it additionally contains usual additives for varnishes, such as siccatives, fundicides, insectizides, bacterizides, emulgating agents, foam suppressors, UV-absorbers, flow improvers, wetting agents, thixotroping agents, coloring matter or fire protecting agents in usually used quantities.

8. A process to increase the dimension stability of wood or particle boards, characterized in that an agent of one of the claims 1 to 7 is applied.

9. A process of claim 8, wherein the treatment of the wood or the particle boards with the agent is made under pressure and/or vacuum.

10. A process of claim 8, wherein the treatment of the wood or the particle boards with the agent is made without pressur or vacuum.

11. A process of one of the claims 8 to 10, wherein wood of the beech tree is treated.

**Revendications**

1. Agent pour la stabilisation de la dimension au bois ou des matériaux en bois, caractérisé en ce qu'il contient 0,01 à 2% en poids d'un composé aromatique polynucléaire condensé du groupe des alkylnaphtalènes, de l'anthracène, du phénanthrène, du pyrène et des homologues correspondants, du fluorène, des alkyl- et benzofluorènes, des alkyl- et benzofluoranthènes, de l'acénaphtylène, du fluorénol, de l'indénopyrène, des azulènes, du décacyclène ou du fluoranthène et 5 à 20% en poids, par rapport à l'agent prêt à l'emploi, d'une résine alkyde.

2. Agent selon la revendication 1, caractérisé en ce que le composé aromatique et la résine alkyde sont dissous dans un solvant organique.

3. Agent selon les revendications 1 et 2, caractérisé en ce qu'une solution selon la revendication 2 est émulsionnée avec de l'eau.

4. Agent selon la revendication 1, caractérisé en ce que le composé aromatique et la résine alkyde sont mis en suspension dans l'eau.

5. Agent selon la revendication 1, caractérisé en ce qu'une solution d'un composé aromatique dans un solvant organique non miscible à l'eau est émulsionnée avec une solution aqueuse d'une résine alkyde hydrosoluble.

6. Agent selon la revendication 1, caractérisé en ce qu'il contient du fluoranthène en tant que composé aromatique.

7. Procédé selon l'une des revendications 1 à 6, caractérisé en ce qu'il contient en outre des additifs pour peintures habituels, par exemple des siccatifs, des fongicides, des insecticides, des bactéricides, des émulsifiants, des agents anti-mousse, des absorbeurs d'UV, des agents de tension, des agents mouillants, des colorants ou des agents ignifuges, aux concentrations usuelles.

8. Procédé destiné à la stabilisation de la dimension du bois ou des matériaux en bois, caractérisé en ce que l'on utilise un agent selon l'une des revendications 1 à 7.

9. Procédé selon la revendication 8, caractérisé en ce que l'on effectue le traitement du bois ou du matériau en bois avec l'agent en appliquant une pression supérieure et/ou une pression inférieure à la normale.

10. Procédé selon la revendication 8, caractérisé en ce que l'on effectue le traitement du bois ou du matériau en bois avec l'agent sans application d'une pression supérieure et/ou d'une pression inférieure à la normale.

11. Procédé selon l'une des revendications 8 à 10, caractérisé en ce que l'on traite du bois de hêtre.